# EUROPÄISCHE PATENTSCHRIFT

(11) **EP 1 362 149 B1**
(45) Veröffentlichungstag und Bekanntmachung des Hinweises auf die Patenterteilung: **22.11.2006**
(21) Anmeldenummer: 02714024.3
(22) Anmeldetag: 19.02.2002
(51) Int. Cl.: E04G 1/15, E04G 7/28

(54) **VERBINDUNGSKONSTRUKTION FÜR GERÜSTRAHMEN**
CONNECTING CONSTRUCTION FOR A FRAMEWORK
STRUCTURE DE CONNEXION POUR UN CADRE D'ECHAFAUDAGE

(30) Priorität: 22.02.2001 DE 20103131 U; 15.03.2001 DE 10112372
(43) Veröffentlichungstag der Anmeldung: 19.11.2003
(73) Patentinhaber: Wilhelm Layher Verwaltungs-GmbH, 74363 Güglingen-Eibensbach (DE)
(72) Erfinder:
(74) Vertreter: Clemens, Gerhard
(86) Internationale Anmeldenummer: PCT/DE2002/000567
(87) Internationale Veröffentlichungsnummer: WO 2002/066767

(56) Entgegenhaltungen:
- CH-A- 406 603
- DE-U- 20 005 629
- US-A- 2 857 026
- US-A- 3 266 208
- US-A- 4 111 579
- US-A- 4 452 337

## Beschreibung

### TECHNISCHES GEBIET

Die vorliegende Erfindung betrifft eine Verbindungskonstruktion für Gerüstrahmen, die Gerüststiele und die Gerüststiele verbindende Querriegel aufweisen, mit einem jeweils im Anschlussbereich des Querriegels an den Gerüststiel angeordneten Knotenblech, das im Eckbereich des Anschlussbereiches des Querriegels an dem Gerüststiel eine Eckausnehmung aufweist, durch die hindurch eine Kupplungseinheit und/oder eine Diagonale an den Gerüststiel anschließbar ist.

Die vorliegende Erfindung betrifft weiterhin einen Gerüstrahmen für eine derartige Verbindungskonstruktion.

### STAND DER TECHNIK

Aus der Veröffentlichung Layher Blitzgerüst (eingetragene Marke) 100 und 70, Aufbau- und Benutzungsanweisung, Ausgabe Juni 1985, ist ein bewährtes Gerüstsystem bekannt. Dabei kommt ein Gerüstrahmen der oben beschriebenen Art zum Einsatz, wobei in der Eckausnehmung beispielsweise eine Gerüstdiagonale formschlüssig anschließbar ist oder eine Kupplungseinheit hindurchführbar und am Gerüststiel anschließbar ist zum Anschließen eines weiteren Gerüstsystemelementes, insbesondere Gerüstrohres.

Um die Standsicherheit eines Gerüstes zu gewährleisten, muss dieses gemäß den geltenden Vorschriften in vorgegebenen Abständen an dem Bauwerk verankert werden. Hierzu wird ein Verankerungsrohr eingesetzt, das an dem Gerüstrahmen befestigt ist und in seinem freien zum Bauwerk hingewandten Endbereich ein Anschlusselement aufweist, das in einem an dem Bauwerk befestigten Wandanker verankert wird. In der Praxis tritt nun häufig das Problem auf, dass an der Stelle, an der eine Wandverankerung vorzusehen ist, eine Konsoleinrichtung an beiden Seiten des Gerüsts bereits an das Gerüst über jeweils eine durch die Eckausnehmung geführte Kupplungseinheit angeschlossen ist, sodass für das Ankerrohr keine weitere Anschlussmöglichkeit im Bereich der Knotenbleche vorhanden ist. Daher werden derartige Ankerrohre häufig unterhalb der Konsolen an die Gerüststiele des Vertikalrahmens angeschlossen, wodurch die Durchgangshöhe deutlich vermindert wird. Die stellenweise Verminderung der Durchgangshöhe bringt jedoch für die auf dem Gerüst arbeitenden Personen Unbequemlichkeiten und eine erhöht aufzuwendende Vorsicht mit sich. Bei Unachtsamkeit besteht die Gefahr von schwerwiegenden Kopfverletzungen.

Um das Ankerrohr für den Wandanker möglichst nahe am Querriegel verankern zu können, sind Sonderkupplungen entwickelt worden, die hinsichtlich einer Krafteinleitung und dem Montageaufwand nicht optimal sind. Gerade in diesem Bereich der Verankerung ist es besonders wichtig, die auftretenden Kräfte möglichst in den Tragsystemmaßen des Gerüsts einzuleiten.

In der NL-A-64 10987 ist ein Knotenblech im Gerüstbau beschrieben, das zwei Ausnehmungen aufweist. In diese Ausnehmungen werden Vorsprungseinheiten eines zweiten Knotenbleches eingeführt, an dem ein Querstab angeschlossen ist. Das zweite Knotenblech wird über eine Keilverbindung am Knotenblech fixiert.

### DARSTELLUNG DER ERFINDUNG

Der vorliegenden Erfindung liegt die Aufgabe beziehungsweise das technische Problem zugrunde, eine Verbindungskonstruktion der eingangs genannten Art anzugeben, die unter Beibehaltung der konstruktiven Gegebenheiten und Geometrien die Anschlussmöglichkeiten im Knotenblech erweitert, und die einfache De- beziehungsweise Montage unter Gewährleistung von hohen Traglasten beibehält. Dabei soll insbesondere ein einfacher Wandankeranschluss ermöglicht werden, ohne dass die Durchgangshöhe zwischen zwei Gerüstfeldern des Gerüsts wesentlich beeinträchtigt wird. Der Erfindung liegt weiterhin die Aufgabe beziehungsweise das technische Problem zugrunde, eine Kupplungseinheit und einen Gerüstrahmen anzugeben, der die Umsetzung der Verbindungskonstruktion im Knotenblechbereich in einfacher Art und weise ermöglicht.

Die erfindungsgemäße Erfindungskonstruktion ist durch die Merkmale des unabhängigen Anspruchs 1 gegeben. Vorteilhafte Ausgestaltungen und Weiterbildungen sind durch die von Anspruch 1 direkt oder indirekt abhängigen Ansprüche 2 bis 13 gegeben.

Der erfindungsgemäße Gerüstrahmen ist durch die Merkmale des unabhängigen Anspruchs 14 gegeben.

Die erfindungsgemäße Verbindungskonstruktion zeichnet sich demgemäß dadurch aus, dass in etwa auf Höhe der Eckausnehmung nach innen versetzt eine weitere Ausnehmung am Knotenblech vorhanden ist, eine weitere Kupplungseinheit mit einem ersten Kupplungselement und einem zweiten Kupplungselement vorhanden ist, wobei an das erste Kupplungselement ein Gerüstrohr anschließbar ist und das zweite Kupplungselement so ausgebildet ist, dass es formschlüssig und/oder kraftschlüssig in der weiteren Ausnehmung des Knotenbleches befestigbar ist und unterhalb der Eckausnehmung des Knotenblechs eine zusätzliche Ausnehmung am Knotenblech vorhanden ist, durch die eine zusätzliche Kupplungseinheit an dem Gerüststiel anschließbar ist.

Eine besonders bevorzugte Ausgestaltung der erfindungsgemäßen verbindungskonstruktion zeichnet sich dadurch aus, dass das zweite Kupplungselement ein Abstandsprofil und ein an die freie Stirnseite des Abstandsprofils angeordnetes Vorsprungprofil aufweist, wobei Letzteres formschlüssig und/oder kraftschlüssig in der weiteren Ausnehmung des Knotenblechs anschließbar beziehungsweise angeschlossen ist.

Eine montagetechnisch besonders einfach zu handhabende Ausführungsvariante, die zudem fertigungstechnisch wirtschaftlich hergestellt werden kann, ist dadurch gekennzeichnet, dass das Vorsprungprofil als Hammerkopf ausgebildet ist und die weitere Ausnehmung als Langloch ausgebildet ist, derart, dass zum Anschließen der weiteren Kupplungseinheit an das Knotenblech das Vorsprungprofil in die weitere Ausnehmung bis zum Anschlag des Abstandsprofils einführbar ist und die form- und/oder kraftschlüssige Verbindung durch Drehen der weiteren Kupplungseinheit hergestellt wird, indem dadurch der Hammerkopf des vorsprungprofils das Knotenblech zumindest bereichsweise hintergreift.

Das Langloch der weiteren Ausnehmung kann beispielsweise vertikal stehend oder horizontal liegend angeordnet sein.

Bevorzugt ist die weitere Ausnehmung beabstandet zum unteren Rand des Querriegels vorhanden, um genügend Raum für die anzuschließende weitere Kupplungseinheit zu schaffen.

Um den Anschluss von standardisierten Gerüstrohren zu gewährleisten, ist das erste Kupplungselement der Kupplungseinheit als Rohr-Halbkupplung ausgebildet.

Eine besonders wirtschaftliche Herstellung, die gleichzeitig eine dauerhaft zuverlässige Funktion im rauen Montagebetrieb gewährleistet, zeichnet sich dadurch aus, dass die weitere Kupplungseinheit als einstückiges Gussteil, insbesondere Metallgussteil, ausgebildet ist.

Um Anschlussmöglichkeiten eines durchgehenden Gerüstrohres oder dergleichen Bauteile zu schaffen, in einer Situation, in der bereits die Eckausnehmung durch eine Kupplungseinheit belegt ist, ist eine erfindungsgemäße Verbindungskonstruktion in alternativer Ausbildung derart ausgebildet, dass die Länge des Vorsprungprofils so gewählt ist, dass der lichte Abstand eines in dem ersten Kupplungselements der weiteren Kupplungseinheit parallel zum Querriegel angeschlossen Gerüstrohres zum Knotenblech hin größer ist als die Länge des maximalen Überstandes relativ zum Knotenblech einer in der Eckausnehmung angeordneten Kupplungseinheit.

Um die Stabilität des Knotenbleches quer zu seiner Ebene zu erhöhen, ist bevorzugt im Bereich der weiteren Ausnehmung des Knotenbleches eine aus der Knotenblechebene weisende Querschnittsverformung vorhanden, die bevorzugt umlaufend um die weitere Ausnehmung vorhanden ist.

Hinsichtlich einer wirtschaftlichen Herstellung ist es besonders vorteilhaft, diese Verbindungskonstruktion derart auszugestalten, dass die zusätzliche Ausnehmung am Knotenblech durch eine zum Anschlusslängsrand des Knotenblechs hin offene U-förmige Ausnehmung gebildet wird.

Eine besonders vorteilhafte Ausgestaltung der erfindungsgemäßen Verbindungskonstruktion, die das Entfallen einer zusätzlichen Verdrehsicherung zur Folge hat, ist dadurch gekennzeichnet, dass an beiden Knotenblechen eines Gerüstrahmens in der weiteren Ausnehmung jeweils eine weitere Kupplungseinheit angeschlossen ist und die Kupplungseinheiten an ein durchgehendes Gerüstrohr angeschlossen sind.

Der erfindungsgemäße Gerüstrahmen für ein Gerüstsystem, der geeignet ist für den Einsatz innerhalb einer verbindungskonstruktion für Bauteile eines Systemgerüstes der oben genannten Art zeichnet sich dadurch aus, dass in etwa auf Höhe der Eckausnehmung des Knotenbleches nach innen versetzt eine weitere Ausnehmung im Knotenblech vorhanden ist, die als Anschluss einer weiteren Kupplungseinheit dient und unterhalb der Eckausnehmung das Knotenblechs eine zusätzliche Ausnehmung im Knotenblech vorhanden ist, durch die hindurch eine zusätzliche Kupplungseinheit an den Gerüststiel anschließbar ist.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Es zeigen:
- Fig. 1: schematische Ansicht eines Gerüstrahmens mit Knotenblechen jeweils mit einer weiteren Ausnehmung und einer zusätzlichen Ausnehmung,
- Fig. 2: schematische Ansicht des Details A gemäß Fig. 1,
- Fig. 3: schematische ausschnittsweise Seitenansicht eines Gerüsts mit einem Anschluss an eine Bauwerkswandung mittels eines Ankerrohrs bei gleichzeitig angeschlossener Konsoleinrichtung,
- Fig. 4: schematische Draufsicht des Anschlussbereiches des Ankerrohrs und der Konsoleinrichtung im Bereich des Knotenbleches des Gerüstrahmens unter Wegschneidung der aufgelegten Gerüstbeläge gemäß Detail B in Fig. 3,
- Fig. 5: schematischer Schnitt durch die Verbindungskonstruktion gemäß Fig. 4 entlang Schnittführung I-I,
- Fig. 6: schematische Detailperspektive des Anschlusses einer Normalkupplungseinheit im Bereich der Eckausnehmung und einer zusätzlichen Normalkupplungseinheit im Bereich der zusätzlichen Ausnehmung,
- Fig. 7: schematische ausschnittsweise Draufsicht auf den Anschluss eines Gerüstes an ein Bauwerk über v-förmig angeordnete Ankerrohre und
- Fig. 8: schematische Detailperspektive der Gerüstelemente der V-förmigen Wandverankerung gemäß Fig. 7 im Bereich des Knotenbleches eines Gerüstrahmens.

### WEGE ZUM AUSFÜHREN DER ERFINDUNG

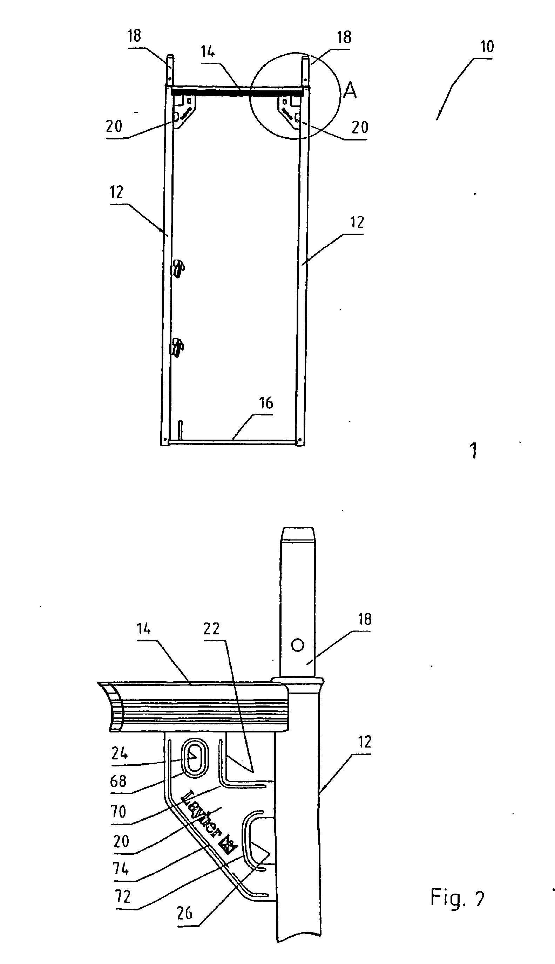

In Figur 1 ist ein Gerüstrahmen 10 dargestellt, der von seinem Aufbau dem Gerüstrahmen des bekannten Layher-Blitz-Gerüstsystems (eingetragene Marke) entspricht. Der Gerüstrahmen 10 weist zwei parallel beabstandete vertikale Gerüststiele oder Vertikalstiele 12 auf, die im oberen Endbereich über einen Querriegel 14, in den Beläge eingehängt werden können, und in ihrem unteren Endbereich über einen Querstab 16 rahmenartig verbunden sind. Im oberen Endbereich ist, über den Querriegel 14 überstehend an jedem Gerüststiel 12 ein Bereich 18 mit gegenüber dem Gerüststiel 12 verringertem Querschnitt vorhanden, der als Rohrverbinder bezeichnet wird. Dadurch kann jeweils ein weiterer Gerüstrahmen 10 aufgesteckt werden.

Im Eckbereich des Anschlusses des Querriegels 14 an den Vertikalstiel 12 ist jeweils ein Knotenblech 20 eingeschweißt, das in Figur 2 näher dargestellt ist. Das Knotenblech 20 besitzt eine Eckausnehmung 22, eine in etwa in Höhe der Eckausnehmung nach innen versetzt angeordnete weitere Ausnehmung 24, die als stehendes Langloch ausgebildet ist, und unterhalb der Eckausnehmung 22 eine zusätzliche Ausnehmung 26, die als U-förmiger Freischnitt des Knotenbleches 20 - vom Anschlussrand zum Vertikalstiel 12 hin gesehen - ausgebildet ist.

Um die Ausnehmung 24 im Randbereich ist umlaufend eine aus der Ebene des Knotenbleches 20 weisende Querschnittsverformung 68 eingeformt, die die Steifigkeit senkrecht zur Ebene des Knotenbleches 20 erhöht. Demselben Zweck dient eine Querschnittsverformung 70, die L-förmig im Randbereich der Eckausnehmung 22 vorhanden ist. Auch die zusätzliche Ausnehmung 26 ist in ihrem Randbereich von einer U-förmigen

Querschnittsverformung 72 umgeben. Um die Beulstabilität weiter zu erhöhen, ist schließlich an dem freien Rand des Knotenbleches 20 ebenfalls eine Querschnittsverformung 74 vorhanden.

Die bekannte Eckausnehmung 22 ist so ausgebildet, dass durch sie hindurch ein Kupplungselement geführt und an dem Vertikalstiel 12 befestigt werden kann. Alternativ ist es möglich, dass in der Eckausnehmung 22 eine Diagonale formschlüssig verankerbar ist, wie es bei dem bekannten Layher-Blitz-Gerüstsystem der Fall ist.

Die weitere Ausnehmung 24 und die zusätzliche Ausnehmung 26 bieten Anschlussmöglichkeiten für Kupplungseinheiten, um weitere Gerüstkomponenten kompakt im Knotenblechbereich anschließen zu können.

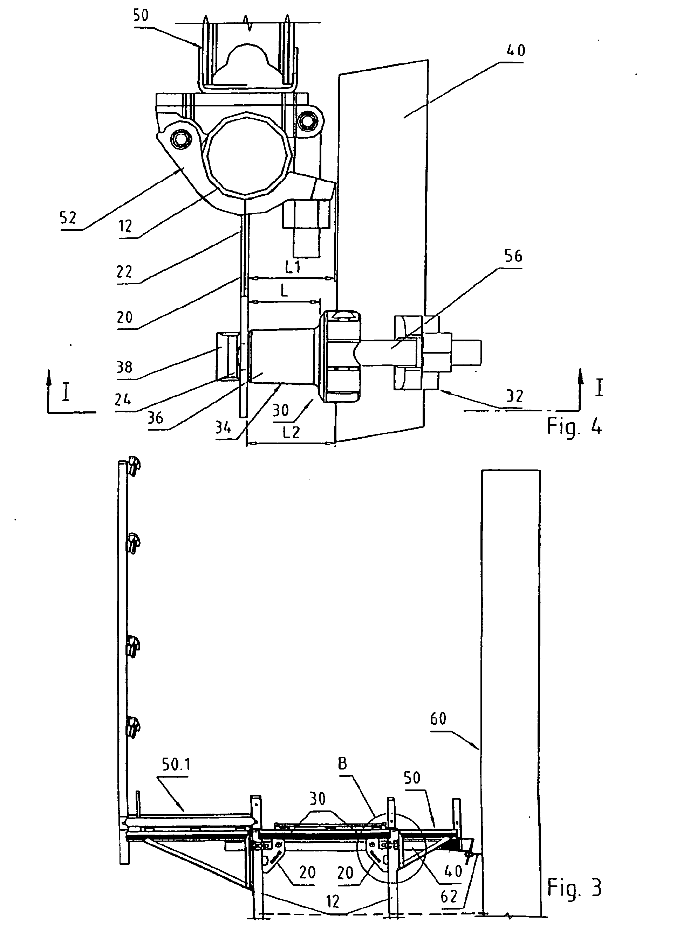

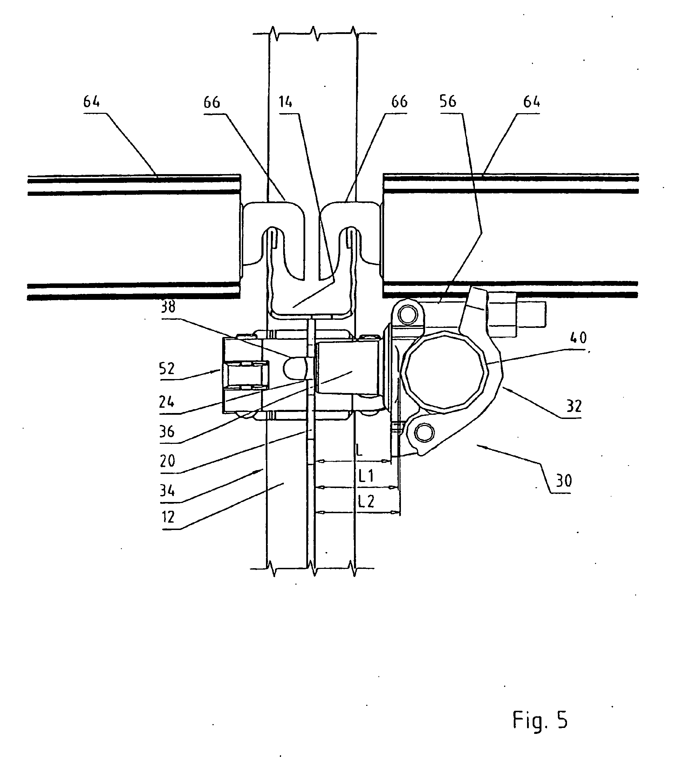

Aus Standsicherheitsgründen muss das Gerüst beziehungsweise müssen die Vertikalrahmen 10 an einem einzurüstenden Bauwerk verankert werden. In Figur 3 ist eine derartige Situation schematisch ausschnittsweise dargestellt. Dabei ist die Situation die, dass bereits zwei nach außen beziehungsweise nach innen ragende Konsoleinheiten 50 jeweils an das Knotenblech 20 angeschlossen sind, wobei der Anschluss über eine Halbkupplung 52 erfolgt, die durch die Eckausnehmung 22 hindurchgeführt ist (Figur 4 und 5). Dadurch war bei den bisherigen Knotenblechen ein weiterer Anschluss nicht mehr möglich. Daher wurde in der Praxis ein zu Verankerungszwecken vorzusehender Anker unterhalb der Konsole an die Vertikalstiele 12 angeschlossen, was in Figur 3 gestrichelt dargestellt ist. Durch diese untere Anordnung des Gerüstrohres 40 wird die Durchgangshöhe reduziert, was die auf dem Gerüst arbeitenden Personen behindert und bei Unachtsamkeit zu Kopfverletzungen führen kann.

Mit der erfindungsgemäßen Konstruktion ist es möglich, dass ein Gerüstrohr 40, das an seinem auskragenden Endbereich mit einem im Bauwerk 60 verankerten Wandanker 62 verbunden ist, unmittelbar im Bereich des Querriegels 14 parallel zu diesem durchgeführt werden kann und an beiden Knotenblechen über spezielle weitere Kupplungseinheiten 30 in einfacher Art und Weise angeschlossen werden kann, was im Folgenden beschrieben wird. Dadurch kann eine Durchgangshöhe von beispielsweise 1,95 m (Meter), die in den Vorschriften gefordert wird, problemlos eingehalten werden.

Die weitere Kupplungseinheit 30 ist in den Figuren 4 und 5 näher dargestellt. Die Figuren 4 und 5 präsentieren die Verbindungskonstruktion, die in Figur 3 als Detail B bezeichnet ist.

Wie bereits erwähnt, ist durch die Eckausnehmung 22 eine Halbkupplung 52 geführt, die an den Gerüststiel 12 angeschlossen ist und den auskragenden Konsolträger 50 anschließt.

Die weitere Kupplungseinheit 30 besitzt ein erstes Kupplungselement 32, das als Halbkupplung 52 ausgebildet ist und in einfacher bekannter Art und Weise an das Ankerrohr 40 durch Verschwenken des Elements 32 mit anschließendem Einfädeln und Anziehen einer Verankerungsschraube 56 angeschlossen werden kann. An das erste Kupplungselement 32 ist ein zweites Kupplungselement 34 angeformt, das ein im Querschnitt kreisförmiges Abstandsprofil 36 aufweist, an dessen Stirnseite ein Vorsprungprofil 38 angeformt ist, das als Hammerkopfelement ausgebildet ist. Die weitere Kupplungseinheit 30 ist bevorzugt als ein Gussteil ausgebildet. Der Hammerkopf des Vorsprungprofils 38 ist hinsichtlich seiner Geometrie so ausgebildet, dass er in einer gedrehten Montageposition in die langlochförmige Ausnehmung 24 eingeführt werden kann. Die weitere Kupplungseinheit 30 wird dabei so weit eingeführt, bis die Stirnseite des Abstandsprofils 36 an der Außenseite des Knotenbleches 20 anliegt. Dann wird die weitere Kupplungseinheit 30 um 90° (Altgrad) gedreht, sodass der Hammerkopf des Vorsprungprofils 38 die Wandung des Knotenbleches hintergreift. Dadurch wird ein formschlüssiger Anschluss der weiteren Kupplungseinheit 30 an dem Knotenblech 20 gewährleistet. Danach kann in einfacher Art und Weise das Ankerrohr 40 über das erste Kupplungselement 32 angeschlossen werden. Die Länge L des Abstandsprofils 36 ist dabei so gewählt, dass der lichte Abstand L2 des montierten Ankerrohrs 40 zur Außenseite des Knotenbleches 20 größer ist als die Länge Ll des über das Knotenblech 20 hinausstehenden Teils der Halbkupplung 52. Dadurch kann das Ankerrohr 40 problemlos an der Halbkupplung 52 vorbeigeführt werden und insgesamt in einer Höhe angeschlossen werden, die die geforderte Durchgangshöhe von 1, 95 m (Meter) gewährleistet. Diese Verbindungskonstruktion hat auch statische Vorteile, da die Kräfte sehr nahe in den Achsen des tragenden Gerüststiels 10 eingeleitet werden.

Dadurch, dass das Ankerrohr 40 an beiden Knotenblechen 20 des Gerüstrahmens 10 über die weitere Kupplungseinheit 30 angeschlossen wird, sind die weiteren Kupplungseinheiten 30 bei angeschlossenem Ankerrohr 40 automatisch gegen Verdrehung gesichert.

In der Darstellung gemäß den Figuren 4 und 5 ist die weitere Kupplungseinheit 30 so angeordnet, dass die Verankerungsschraube 56 des ersten Kupplungselements 32 oberseitig vorhanden ist, das heißt knapp unterhalb des über Einhängekrallen 66 in den als nach oben offenes U-Profil ausgebildeten Querriegel 14 eingehängten Belags 64. Es ist jedoch auch möglich, die weitere Kupplungseinheit 30 um 180° (Altgrad) gedreht zu montieren, das heißt dass in diesem Fall die Verankerungsschraube 56 unterseitig vorhanden ist. Eine derartige Montageposition ist beispielsweise gegeben, wenn im Bereich der Verbindungskonstruktion ein Durchgangstreppenelement angeordnet ist und deshalb die unterseitige Anordnung der Verankerungsschraube 56 eine montagetechnisch leichtere Zugänglichkeit mit sich bringt.

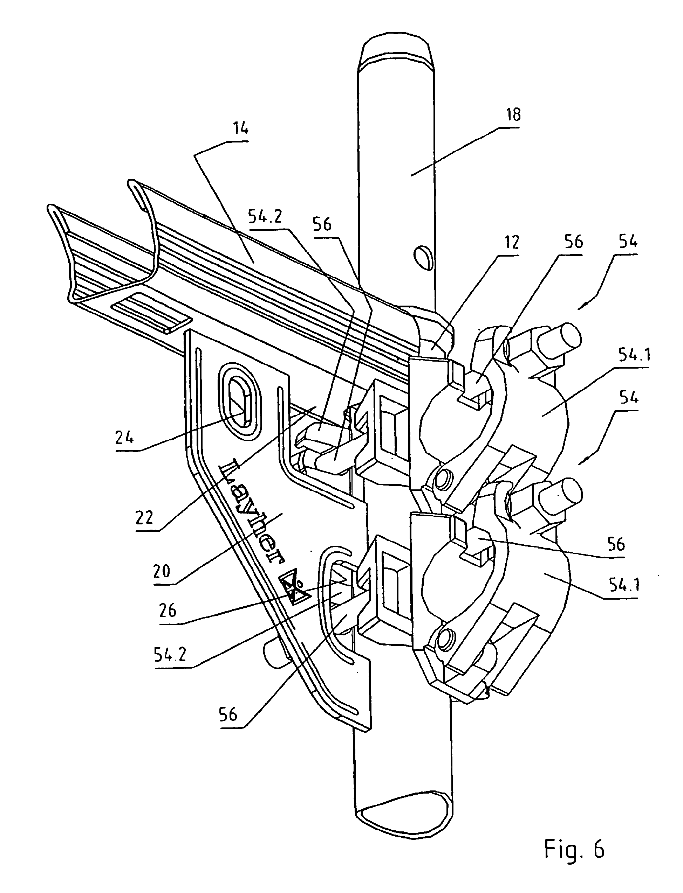

Figur 6 zeigt schematisch die kompakte Anschlussmöglichkeit einer zusätzlichen Kupplungseinheit 54 im Bereich des Knotenbleches 20. In der Eckausnehmung ist gemäß Figur 6 bereits eine normale Kupplung 54 mit einem ersten Kupplungselement 54.1 und einem zweiten Kupplungselement 54.2 vorhanden. Das zweite Kupplungselement 54.2 ist durch die Eckausnehmung 22 hindurchgeführt und an den Vertikalstiel 12 angeschlossen. An das erste Kupplungselement 54.1 kann nun ein weiteres Gerüstrohr angeschlossen werden.

Direkt darunter ist die zusätzliche Kupplungseinheit 54 mit ihren Kupplungselementen 54.1 und 54.2 vorhanden. Das zweite Kupplungselement 54.2 ist dabei durch die zusätzliche Ausnehmung 54 hindurchgeführt und an den Vertikalstiel 12 angeschlossen. Das erste Kupplungselement 54.1 bietet eine weitere Anschlussmöglichkeit für ein weiteres Gerüstrohr.

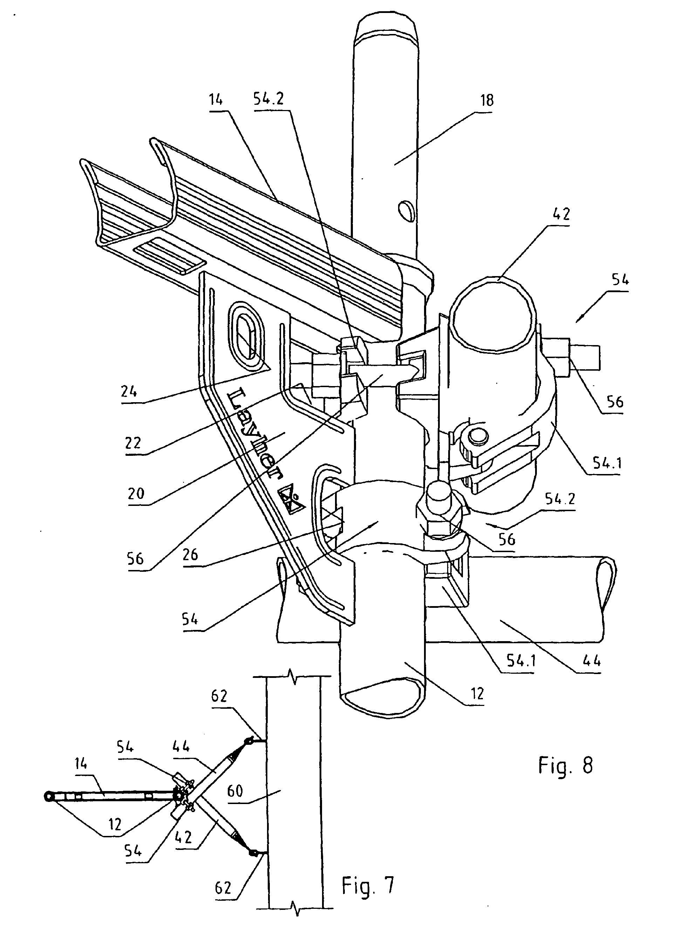

Ein praktischer Anwendungsfall ist in den Figuren 7 und 8 dargestellt. Dabei geht es auch wiederum um die Verankerung des Gerüsts an einem Bauwerk 60. In dem dargestellten Ausführungsbeispiel kommt eine sogenannte V-Verankerung zum Einsatz. Dabei wird ein erstes Ankerrohr 42 und ein zweites Ankerrohr 44 eingesetzt, die in der Draufsicht gemäß Figur 7 gesehen V-förmig ausgebildet sind, wobei die Spitze des V's im Bereich des Knotenbleches anzuschließen ist und die gegenüberliegenden Endbereiche der Ankerrohre 42, 44 über einen Wandanker 62 an dem Bauwerk 60 befestigt werden. Wie aus Figur 8 ersichtlich ist es problemlos möglich, die Ankerrohre 42 beziehungsweise 44 in kompakter Art und Weise im Bereich des Knotenbleches 20 an den Vertikalstiel 12 anzuschließen. Der Winkel, den die beiden Ankerrohre 42 beziehungsweise 44 bilden, kann problemlos variiert werden.

## Patentansprüche

1. Verbindungskonstruktion für Gerüstrahmen (10), die Gerüststiele (12) und die Gerüststiele (12) verbindende Querriegel (14) aufweisen, mit
- einem jeweils im Anschlussbereich des Querriegels (14) an den Gerüststiel (12) angeordneten Knotenblech (20), das im Eckbereich des Anschlussbereiches des Querriegels (14) an dem Gerüststiel (12) eine Eckausnehmung (22) aufweist, durch die hindurch eine Kupplungseinheit (52) an den Gerüststiel (12) anschließbar ist,
**dadurch gekennzeichnet, dass**
- in etwa auf Höhe der Eckausnehmung (22) nach innen versetzt eine weitere Ausnehmung (24) am Knotenblech (20) vorhanden ist,
- eine weitere Kupplungseinheit (30) mit einem ersten Kupplungselement (32) und einem zweiten Kupplungselement (34) vorhanden ist, wobei an das erste Kupplungselement (32) ein Gerüstrohr (40) anschließbar ist und das zweite Kupplungselement (34) so ausgebildet ist, dass es formschlüssig und/oder kraftschlüssig in der weiteren Ausnehmung (24) des Knotenbleches (20) befestigbar ist, und
- unterhalb der Eckausnehmung (22) des Knotenblechs (20) eine zusätzliche Ausnehmung (26) am Knotenblech (20) vorhanden ist, durch die eine zusätzliche Kupplungseinheit (54) an dem Gerüststiel (12) anschließbar ist.

2. Verbindungskonstruktion nach Anspruch 1,
**dadurch gekennzeichnet, dass**
- das zweite Kupplungselement (34) ein Abstandsprofil (36) und ein an die freie Stirnseite des Abstandsprofils (36) angeordnetes Vorsprungprofil (38) aufweist, wobei Letzteres formschlüssig und/oder kraftschlüssig in der weiteren Ausnehmung (24) des Knotenblechs (20) anschließbar beziehungsweise angeschlossen ist.

3. Verbindungskonstruktion nach Anspruch 2,
**dadurch gekennzeichnet, dass**
- das Vorsprungprofil (38) als Hammerkopf ausgebildet ist und die weitere Ausnehmung (24) als Langloch ausgebildet ist, derart, dass zum Anschließen der weiteren Kupplungseinheit (30) an das Knotenblech (20) das Vorsprungprofil (38) in die weitere Ausnehmung (24) bis zum Anschlag des Abstandsprofils (36) einführbar ist und die form- und/oder kraftschlüssige Verbindung durch Drehen der weiteren Kupplungseinheit (30) hergestellt wird, indem **dadurch** der Hammerkopf des vorsprungprofils (38) das Knotenblech (20) zumindest bereichsweise hintergreift.

4. Verbindungskonstruktion nach Anspruch 3,
**dadurch gekennzeichnet, dass**
- das Langloch der weiteren Ausnehmung (24) vertikal stehend angeordnet ist.

5. verbindungskonstruktion nach Anspruch 3,
**dadurch gekennzeichnet, dass**
- das Langloch der Ausnehmung horizontal liegend angeordnet ist.

6. Verbindungskonstruktion nach einem oder mehreren der vorstehenden Ansprüche,
**dadurch gekennzeichnet, dass**
- die weitere Ausnehmung (24) beabstandet zum unteren Rand des Querriegels (14) angeordnet ist.

7. Verbindungskonstruktion nach einem oder mehreren der vorstehenden Ansprüche,
**dadurch gekennzeichnet, dass**
- das erste Kupplungselement (32) der weiteren Kupplungseinheit (30) als Rohr-Halbkupplung ausgebildet ist.

8. verbindungskonstruktion nach einem oder mehreren der vorstehenden Ansprüche,
**dadurch gekennzeichnet, dass**
- die weitere Kupplungseinheit (30) als einstückiges Gussteil, insbesondere Metallgussteil, ausgebildet ist.

9. Verbindungskonstruktion nach einem oder mehreren der vorstehenden Ansprüche,
**dadurch gekennzeichnet, dass**
- die Länge (L) des Vorsprungprofils (38) so gewählt ist, dass der lichte Abstand (L2) eines in dem ersten Kupplungselements (32) der weiteren Kupplungseinheit (30) parallel zum Querriegel (14) angeschlossen Gerüstrohres (40) zum Knotenblech (20) hin größer ist als die Länge (L1) des maximalen Überstandes relativ zum Knotenblech (20) einer in der Eckausnehmung (22) angeordneten Kupplungseinheit (52).

10. Verbindungskonstruktion nach einem oder mehreren der vorstehenden Ansprüche,
**dadurch gekennzeichnet, dass**
- die weitere Ausnehmung (24) des Knotenblechs (20) eine aus der Knotenblechebene weisende Querschnittsverformung (68) aufweist.

11. Verbindungskonstruktion nach Anspruch 10,
**dadurch gekennzeichnet, dass**
- die Querschnittsverformung (68) umlaufend um die weitere Ausnehmung (24) vorhanden ist.

12. Verbindungskonstruktion nach Anspruch 1,
**dadurch gekennzeichnet, dass**
- die zusätzliche Ausnehmung (26) am Knotenblech (20) durch eine zum Anschlusslängsrand des Knotenblechs (20) hin offene U-förmige Ausnehmung gebildet wird.

13. Verbindungskonstruktion nach einem oder mehreren der vorstehenden Ansprüche,
**dadurch gekennzeichnet, dass**
an beiden Knotenblechen (20) eines Gerüstrahmens (10) in der weiteren Ausnehmung (24) jeweils eine weitere Kupplungseinheit (30) angeschlossen ist und die Kupplungseinheiten (30) an ein durchgehendes Gerüstrohr (40) angeschlossen sind.

14. Gerüstrahmen (10) für ein Gerüstsystem, der Gerüststiele (12) und die Gerüststiele (12) verbindende Querriegel (14) aufweist, mit
- einem jeweils im Anschlussbereich des Querriegels (14) an den Gerüststiel (12) angeordneten Knotenblech (20), das im Eckbereich des Anschlussbereiches des Querriegels (14) an dem Gerüststiel (12) eine Eckausnehmung (22) aufweist, durch die hindurch eine Kupplungseinheit (52) an den Gerüststiel (12) anschließbar ist, insbesondere geeignet für den Einsatz innerhalb einer Verbindungskonstruktion für Bauteile eines Systemgerüsts nach einem oder mehreren der Ansprüche 1 bis 13,
**dadurch gekennzeichnet, dass**
- in etwa auf Höhe der Eckausnehmung (22) des Knotenbleches (20) nach innen versetzt eine weitere Ausnehmung (24) im Knotenblech (20) vorhanden ist, die als Anschluss einer weiteren Kupplungseinheit (30) verwendbar ist, und
- unterhalb der Eckausnehmung (22) des Knotenblechs (20) eine zusätzliche Ausnehmung (26) im Knotenblech (20) vorhanden ist, durch die hindurch eine zusätzliche Kupplungseinheit (54) an den Gerüststiel (12) anschließbar ist.

## Claims

1. A connecting construction for
frameworks (10) which have frame struts (12) and cross brackets (14) connecting the frame struts (12), having
- a sheet steel corner plate (20) which is arranged in each case in the region in which the cross bracket (14) is connected to the frame strut (12) and which has a corner recess (22) in the corner region of the region in which the cross bracket (14) is connected to the frame strut (12), by means of which a coupling unit (52) can be connected to the frame strut (12),
**characterized in that**
- a further recess (24) is provided at the sheet steel corner plate (20) approximately level with the corner recess (22) and offset inward,
- a further coupling unit (30) having a first coupling element (32) and a second coupling element (34) is provided, it being possible for a frame tube (40) to be connected to the first coupling element (32), and the second coupling element (34) being designed in such a manner that it can be fastened in the further recess (24) of the sheet steel corner plate (20) with a positive and/or non-positive fit, and
- an additional recess (26) is provided below the corner recess (22) of the sheet steel corner plate (20), by means of which an additional coupling unit (54) can be connected or is connected to the frame strut (12).

2. The connecting construction as claimed in claim 1,
**characterized in that**
- the second coupling element (34) has a spacer profile (36) and a projecting profile (38) arranged on the free end side of the spacer profile (36), it being possible for said projecting profile to be connected or said projecting profile is connected in the further recess (24) of the sheet steel corner plate (20) with a positive and/or non-positive fit.

3. The connecting construction as claimed in claim 2,
**characterized in that**
- the projecting profile (38) is designed as a hammer head and the further recess (24) is designed as a slot in such a manner that in order to connect the further coupling unit (30) to the sheet steel corner plate (20), the projecting profile (38) can be introduced into the further recess (24) as far as the stop of the spacer profile (36) and the positive and/or non-positive connection is produced by rotation of the further coupling unit (30) by said rotation causing the hammer head of the projecting profile (38) to engage at least in some areas behind the sheet steel corner plate (20).

4. The connecting construction as claimed in claim 3,
**characterized in that**
- the slot of the further recess (24) is arranged vertically upright.

5. The connecting construction as claimed in claim 3,
**characterized in that**
- the slot of the recess is arranged lying horizontally.

6. The connecting construction as claimed in one or more of the preceding claims,
**characterized in that**
- the further recess (24) is arranged spaced apart from the lower edge of the cross bracket (14).

7. The connecting construction as claimed claims 1 to 3,
**characterized in that**
- the first coupling element (32) of the further coupling unit (30) is designed as a tube half-coupling.

8. The connecting construction as claimed in claims 1 to 3,
**characterized in that**
- the further coupling unit (30) is designed as a single-piece cast part, in particular a metal cast part.

9. The connecting construction as claimed claims 1 to 3,
**characterized in that**
- the length (L) of the projecting profile (38) is selected in such a manner that the clear distance (L2) of a frame tube (40), which is connected parallel to the cross bracket (14) in the first coupling element (32) of the further coupling unit (30), from the sheet steel corner plate (20) is greater than the length (L1) of the maximum projecting length relative to the sheet steel corner plate (20) of a coupling unit (52) arranged in the corner recess (22).

10. The connecting construction as claimed in claims 1 to 3,
**characterized in that**
- the further recess (24) of the sheet steel corner plate (20) has a cross-sectional deformation (68) pointing out of the plane of the sheet steel corner plate.

11. The connecting construction as claimed in claim 10,
**characterized in that**
- the cross-sectional deformation (68) is provided encircling the further recess (24).

12. The connecting construction as claimed in claim 1,
**characterized in that**
- the additional recess (26) on the sheet steel corner plate (20) is formed by a U-shaped recess which is open toward the longitudinal connecting edge of the sheet steel corner plate (20).

13. The connecting construction as claimed in one or more of the preceding claims,
**characterized in that**
a further coupling unit (30) is connected in each case in the further recess (24) to the two sheet steel corner plates (20) of a framework (10), and the coupling units (30) are connected to a continuous frame tube (40).

14. A framework (10) for a frame system, in particular suitable for use within a connecting construction for components of a system frame, comprising:
- frame struts (12) and cross brackets (14) connecting the frame struts (12),
- a sheet steel corner plate (20) which is arranged in each case in the region in which the cross bracket (14) is connected to the frame strut (12) and which has a corner recess (22) in the corner region of the region in which the cross bracket (14) is connected to the frame strut (12), by means of which a coupling unit (52) can be connected to the frame strut (12),
**characterized in that**
- a further recess (24) is provided approximately level with the corner recess (22) and offset inward,
- said further recess (24) is provided in the sheet steel corner plate (20)and is used as a connection for a further coupling unit (30), and
- an additional recess (26) is provided in the sheet steel corner plate (20) below the corner recess (22) of the sheet steel corner plate (20), by means of which an additional coupling unit (54) can be connected to the frame strut (12).

## Revendications

1. Dispositif d'assemblage pour cadres d'échafaudage (10) qui présentent des montants (12) et des moises (14) reliant les montants (12), comprenant
- un gousset (20) qui est chaque fois disposé dans la zone où la moise (14) est raccordée au montant (12) et qui présente dans le coin de la zone où la moise (14) est raccordée au montant (12) un évidement d'angle (22) à travers lequel une unité d'accouplement (52) peut être raccordée au montant (12),
**caractérisé en ce que**
- sur le gousset (20), approximativement à la hauteur de l'évidement d'angle (22), est prévu un évidement supplémentaire (24) décalé vers l'intérieur,
- une unité d'accouplement supplémentaire (30) comportant un premier élément d'accouplement (32) et un second élément d'accouplement (34) est prévue, un tube d'échafaudage (40) pouvant être raccordé au premier élément d'accouplement (32) et le second élément d'accouplement (34) étant réalisé de telle sorte qu'il puisse être fixé par engagement positif et/ou par adhérence dans l'évidement supplémentaire (24) du gousset (20), et
- sous l'évidement d'angle (22) du gousset (20) est prévu un évidement additionnel (26) dans le gousset (20), par lequel une unité d'accouplement supplémentaire (54) peut être raccordée au montant (12).

2. Dispositif d'assemblage selon la revendication 1, **caractérisé en ce que** le second élément d'accouplement (34) présente un profil d'écartement (36) et, disposé sur la face frontale libre du profil d'écartement (36), un profil en saillie (38), ce dernier pouvant être ou étant raccordé par engagement positif et/ou par adhérence dans l'évidement supplémentaire (24) du gousset (20).

3. Dispositif d'assemblage selon la revendication 2, **caractérisé en ce que** le profil en saillie (38) est réalisé en tant que tête de marteau et l'évidement supplémentaire (24), en tant que trou oblong, de telle sorte que, pour raccorder l'unité d'accouplement supplémentaire (30) au gousset (20), le profil en saillie (38) peut être introduit dans l'évidement supplémentaire (24) jusqu'à ce que le profil d'écartement (36) vienne en butée, et que la liaison par engagement positif et/ou par adhérence soit établie en tournant l'unité d'accouplement supplémentaire (30), à l'occasion de quoi la tête de marteau du profil en saillie (38) vient se mettre en prise au moins partiellement à l'arrière du gousset (20).

4. Dispositif d'assemblage selon la revendication 3, **caractérisé en ce que** le trou oblong de l'évidement supplémentaire (24) est orienté verticalement.

5. Dispositif d'assemblage selon la revendication 3, **caractérisé en ce que** le trou oblong de l'évidement est orienté horizontalement.

6. Dispositif d'assemblage selon l'une ou plusieurs des revendications précédentes, **caractérisé en ce que** l'évidement supplémentaire (24) est disposé à distance du bord inférieur de la moise (14).

7. Dispositif d'assemblage selon l'une ou plusieurs des revendications précédentes, **caractérisé en ce que** le premier élément d'accouplement (32) de l'unité d'accouplement supplémentaire (30) est réalisé en tant que demi-collier.

8. Dispositif d'assemblage selon l'une ou plusieurs des revendications précédentes, **caractérisé en ce que** l'unité d'accouplement supplémentaire (30) est une pièce coulée d'un seul tenant, notamment en métal.

9. Dispositif d'assemblage selon l'une ou plusieurs des revendications précédentes, **caractérisé en ce que** la longueur (L) du profil en saillie (38) est telle que l'écart (L2) entre un tube d'échafaudage (40) raccordé au premier élément d'accouplement (32) de l'unité d'accouplement supplémentaire (30), parallèlement à la moise (14), et le gousset (20) est supérieur à la longueur (L1) du débord maximal par rapport au gousset (20) d'une unité d'accouplement (52) disposée dans l'évidement d'angle (22).

10. Dispositif d'assemblage selon l'une ou plusieurs des revendications précédentes, **caractérisé en ce que** l'évidement supplémentaire (24) du gousset (20) présente une déformation (68) de la section transversale qui fait saillie du plan du gousset.

11. Dispositif d'assemblage selon la revendication 10, **caractérisé en ce que** la déformation (68) de la section transversale est présente tout autour de l'évidement supplémentaire (24).

12. Dispositif d'assemblage selon la revendication 1, **caractérisé en ce que** l'évidement additionnel (26) du gousset (20) est formé par un évidement en forme de U ouvert vers le bord longitudinal du gousset (20).

13. Dispositif d'assemblage selon l'une ou plusieurs des revendications précédentes, **caractérisé en ce que**, sur les deux goussets (20) d'un cadre d'échafaudage (10), une unité d'accouplement supplémentaire (30) est chaque fois raccordée à l'évidement supplémentaire (24), et les unités d'accouplement (30) sont raccordées à un tube d'échafaudage (40) traversant.

14. Cadre d'échafaudage (10) pour un système d'échafaudage, qui présente des montants (12) et des moises (14) reliant les montants (12), comprenant
- un gousset (20) qui est chaque fois disposé dans la zone où la moise (14) est raccordée au montant (12) et qui présente dans le coin de la zone où la moise (14) est raccordée au montant (12) un évidement d'angle (22) à travers lequel une unité d'accouplement (52) peut être raccordée au montant (12), en particulier qui est destiné à être mis en oeuvre en association avec un dispositif d'assemblage pour des éléments d'un système d'échafaudage selon une ou plusieurs des revendications 1 à 13, **caractérisé en ce que**
- à peu près à la hauteur de l'évidement d'angle (22) du gousset (20), un évidement supplémentaire (24) décalé vers l'intérieur est prévu dans le gousset (20), qui sert à raccorder une unité d'accouplement supplémentaire (30), et
- sous l'évidement d'angle (22) du gousset (20), un évidement additionnel (26) est prévu dans le gousset (20), à travers lequel une unité d'accouplement additionnelle (54) peut être raccordée au montant (12).
